# EUROPÄISCHE PATENTANMELDUNG

(11) **EP 1 021 026 A2**
(43) Veröffentlichungstag der Anmeldung: **19.07.2000**
(21) Anmeldenummer: 00100220.3
(22) Anmeldetag: 14.01.2000
(51) Int. Cl.: H04M 3/22

(54) **Anordnung zur Anbindung eines Bedien-, Verwaltungs- und Wartungszentrums an eine digitale Fernmeldevermittlungsstelle**

(30) Priorität: 14.01.1999 DE 19901207
(71) Anmelder: SIEMENS AKTIENGESELLSCHAFT, 80333 München (DE)
(72) Erfinder: Hoffmann, Johannes, 1220 Wien (AT); Klein, Wilhelm, 2124 Niederkreuzstetten (AT)

(57) **Zusammenfassung**

Für den direkten Anschluß mindestens einer zweiten einzelnen digitalen Fernmeldevermittlungsstelle (VST5) und/oder für den indirekten Anschluß weiterer mehrerer digitaler Fernmeldevermittlungsstellen (VST2, VST3,VST4) über ein gesondertes Datenkommunikationsnetz an ein Bedien-, Verwaltungs- und Wartungszentrum ist jeweils ein weiterer Gateway-Rechner (GBCT2; GBCT3) vorgesehen, wobei in sämtlichen solchen Gateway-Rechnern eine Verkehrsleitfunktion (RF) integriert ist.

## Beschreibung

Die Erfindung betrifft eine Anordnung einer optimierten Anbindung eines mit mindestens einem Bedienrechner ausgestatteten Bedien-, Verwaltungs- und Wartungszentrums an wenigstens eine digitale Fernmeldevermittlungsstelle gemäß dem Oberbegriff des Patentanspruchs 1.

Bezüglich der digitalen Fernmeldevermittlungsstellen eines Telekommunikationsnetzes werden Verwaltungs- und Wartungsaufgaben wie z.B. die Einrichtung neuer Teilnehmer, das Freischalten von Datendiensten für bestimmte Teilnehmer, die Teilnehmerdatenverwaltung sowie Prüffunktionen an sogenannten Bedienterminals bzw. -rechnern durchgeführt, die mit den Fernmeldevermittlungsstellen in Verbindung stehen. Üblicherweise stehen die Bedienrechner in einem Bedien-, Verwaltungs-und Wartungszentrum, das sich meist an einem anderen Ort als die Fernmeldevermittlungsstellen befindet.

Eine gebräuchliche Anschlußmöglichkeit einer Fernmeldevermittlungsstelle an solche Bedienrechner eines Bedien-, Verwaltungs- und Wartungszentrums ist aus einer Kundenbroschüre der Siemens AG mit dem Titel "EWSD Basic Craft Terminal - Operation direct and to the point", veröffentlicht im Jahre 1997 bekannt (Bestellnummer: A30808-X2740-V800-1-7618, Siemens AG, Hofmannstr. 56, D- 81359 Müchen).

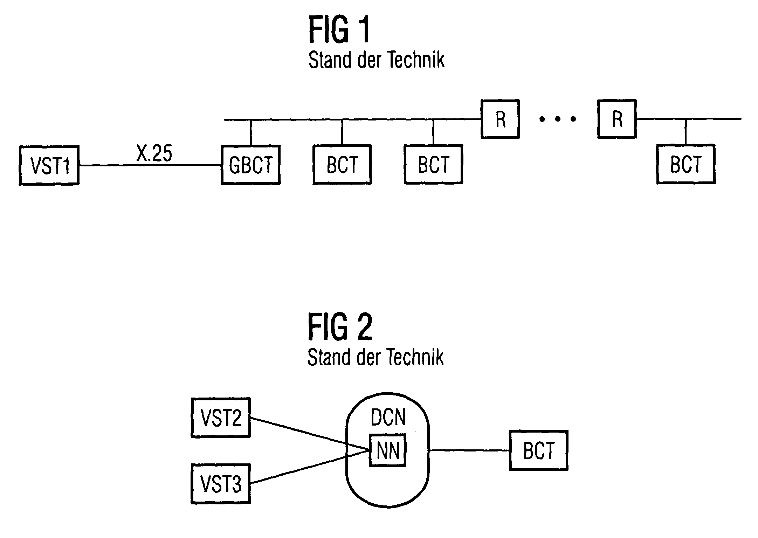

Gemäß der Figur 1, die der Abbildung auf Seite 13 der genannten Kundenbroschüre entspricht, wird von folgender Konstellation ausgegangen:

Eine Fernmeldevermittlungsstelle VST1 wird über eine Verbindungsleitung, vorzugsweise über eine Standleitung z.B. X.25 oder über eine Wählleitung z.B. X.25 über ISDN an einen Bedienrechner in Form eines Gateway-Rechners GBCT des Bedien-, Verwaltungs- und Wartungszentrums angeschlossen. Dieser Gateway-Rechner ist Bestandteil eines im Bedien-, Verwaltungs-und Wartungszentrums installierten Rechnernetzes mit weiteren Bedienrechnern BCT und ist derart ausgestattet, daß er die Anbindung der Fernmeldevermittlungsstelle an das Rechnernetz ermöglicht. Die Bedienrechner BCT und GBCT sind über eine Datenleitung miteinander verbunden. In der Figur 1 wird eine busartige Rechnernetztopologie gezeigt. In einem solchen Rechnernetz ist normalerweise zusätzlich zumindest eine Vermittlungseinrichtung in Form eines Routers R vorhanden, über den das Rechnernetz mit einem weiteren Daten- bzw. Rechnernetz verbunden werden kann.

In der Figur 2, die auszugsweise aus der Abbildung auf Seite 38 einer Kundenbroschüre der Siemens AG mit dem Titel "EWSD - the Generic Platform for All Applications", veröffentlicht im Jahre 1995 (Bestellnummer: A30808-X2589-X100-8-7618, Hofmannstr. 51, D-81359 München) hervorgeht, ist eine Anschlußmöglichkeit angedeutet, wenn eine weitere Fernmeldevermittlungsstelle an einen Bedienrechner angeschaltet werden soll. Normalerweise sind zwei oder mehrere Fernmeldevermittlungsstellen VST1 und VST2 indirekt über ein Datenkommunikationsnetz DCN mit dem Bedienrechner BCT verbunden. Im einfachsten Fall besteht ein Datenkommunikationsnetz aus einem einzigen Netzknoten NN in Form eines sogenannten Routers, der die Fernmeldevermittlungsstellen VST1 und VST2 und den Bedienrechner BCT miteinander verbindet.

In der Praxis gibt es viele Fernmeldevermittlungsstellen in einem Telekommunikationsnetz und mehrere Bedienrechner in einem Bedien-, Verwaltungs- und Wartungszentrum, so daß von jedem Bedienrechner zu jeder Fernmeldevermittlungsstelle eine Verbindung herstellbar sein soll. Dies erfordert derzeit den Aufbau eines komplexen sowie kosten- und hardwareaufwendigen Datenkommunikationsnetzes mit mehreren Netzknoten. Sofern lokal bereits kleinere Datenkommunikationsnetze mit z.B. einem einzigen Netzknoten existieren, müssen diese noch über teuere Verbindungsleitungen und eventuell weiteren Routern untereinander verbunden werden.

Die Aufgabe der Erfindung besteht daher darin, die im Oberbegriff des Patentanspruchs 1 angegebene Anordnung dahingehend zu auszugestalten, daß jeder Bedienrechner in einem Bedien-, Verwaltungs- und Wartungszentrun eine Verbindung zu jeder Fernmeldevermittlungsstelle aufweist und dazu möglichst wenig Hardware aufgewendet wird.

Diese Aufgabe wird durch die im Kennzeichen des Anspruchs 1 angegebenen Merkmale gelöst. Weitere Ausgestaltungen der Erfindung sind in Unteransprüchen gekennzeichnet.

Erfindungsgemäß wird dies dadurch erreicht, daß für den direkten Anschluß jeder weiteren einzelnen digitalen Fernmeldevermittlungsstelle an das Bedien-, Verwaltungs- und Wartungszentrum jeweils ein weiterer Bedienrechner in Form eines Gateway-Rechners vorgesehen ist. Auch für den indirekten Anschluß weiterer mehrerer digitaler Fernmeldevermittlungsstellen über ein möglicherweise bereits vorhandenes gesondertes Datenkommunikationsnetz ist jeweils ein weiterer solcher Gateway-Rechner bestimmt. In sämtlichen solchen Gateway-Rechner ist schließlich eine Verkehrsleitfunktion integriert.

Aufgrund der erfindungsgemäßen Anordnung werden enorme Hardwareaufwendungen eingespart. Im Falle, daß die digitalen Fernmeldevermittlungsstellen noch nicht über ein derartiges Datenkommunikationsnetz untereinander verbunden sind, können sie einzeln über jeweils eine einzige Verbindungsleitung z.B. eine X.25-Standleitung oder eine ISDN-Wählleitung an je einen im Rechnernetz des Beten-, Verwaltungs- und Wartungsnetzes vorhandenen Gateway-Rechner angebunden werden. Für den Fall, daß einige Fernmeldevermittlungsstellen über ein z.B. lokal bereits vorhandenes gesondertes Datenkommunikationsnetz untereinander verbunden sind, kann ein solches Datenkommunikationsnetz an jeweils einen weiteren solchen Gateway-Rechner angebunden werden. So entfallen die zur Bildung eines vollständig vermaschten Datenkommunikationnetzes notwendigen Verbindungsleitungen und Netzknoten in Form von Routern. In den Gateway-Rechnern wird zusätzlich eine Verkehrsleitfunktion integriert. Auf diese Weise wird die Funktionalität des zum Teil eingesparten Datenkommunikationsnetzes jetzt in das Rechnernetz des Bedien-, Verwaltungs- und Wartungszentrums verlagert. Auf der Seite der Fernmeldevermittlungstellen müssen auch keine Anpassungsmaßnahmen getroffen werden.

Eine besonders kostengünstige Weiterbildung der Erfindung sieht vor, für die Bedienrechner bzw. Gateway-Rechner Personalcomputer zu verwenden. Personalcomputer können außerdem unabhängig von einem solchen Rechnernetz betrieben werden, so daß bei einem Ausfall des Rechnernetzes wenigstens noch eine Verbindung von einem Gateway-Rechner zu zumindest einer Fernmeldevermittlungsstelle aufrechterhalten bleibt.

Gemäß einer weiteren Ausgestaltung der Erfindung sind die im Rechnernetz vorhandenen Bedienrechner und Gateway-Rechner bzgl. ihrer Kommunikation gleichberechtigt. Dadurch kann jeder Bedien- und Gateway-Rechner auf alle Informationen zugreifen.

Eine weitere vorteilhafte Ausgestaltung der Erfindung ermöglicht die Verbindung des Rechnernetzes mit einem weiteren Daten- oder Rechnernetz. Demgemäß ist in einem solchen Rechnernetz wenigstens eine Vermittlungseinrichtung in Form eines Geräts oder Rechners oder einer Schnittstelle innerhalb eines Bedienrechners vorhanden, die die Funktionalität zum Anschluß eines weiteren Rechnernetzes aufweist und in die eine dafür entsprechende Verkehrsleitfunktion integriert ist. Auf diese Weise können mehrere meist örtlich getrennt liegende Bedien-, Verwaltungs- und Wartungszentren miteinander verbunden werden. Somit kann ein Bedienrechner des einen Bedien-, Verwaltungs- und Wartungszentrums eine Verbindung zu einer Fernmeldevermittlungsstelle herstellen, die an einen Bedienrechner (Gateway-Rechner) eines anderen Bedien-, Verwaltungs- und Wartungszentrums angeschlossen ist.

Nachstehend wird ein Ausführungsbeispiel der Erfindung unter Bezugnahme auf eine Zeichnung näher erläutert.

In der Zeichnung zeigen:
Fig. 1 und Fig. 2 den eingangs erwähnten Stand der Technik,
Fig. 3 ein Beispiel zur erfindungsgemäßen Anordnung zur optimierten Anbindung wenigstens einer digitalen Fernmeldevermittlungsstelle an ein Bedien-, Verwaltungs- und Wartungszentrum.

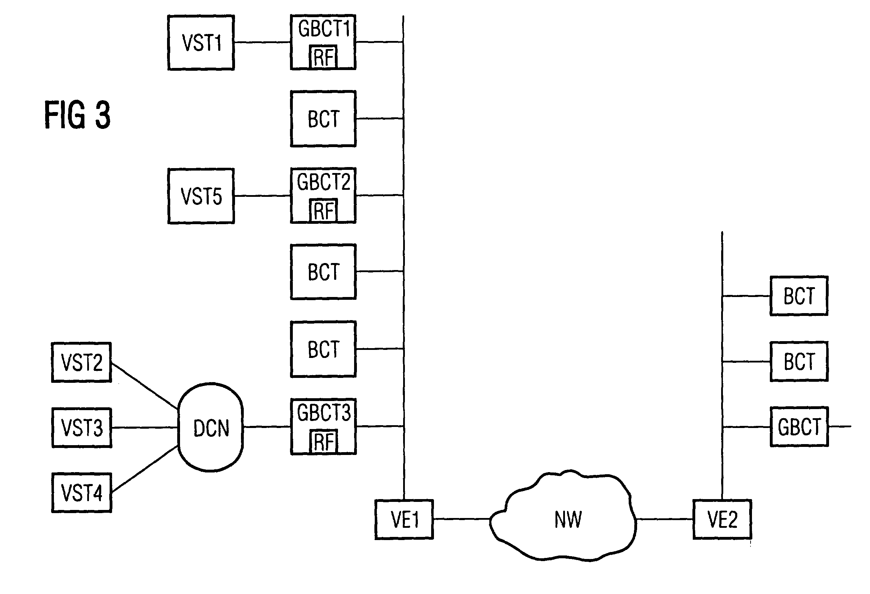

In Figur 3 sind digitale Fernmeldevermittlungsstellen VST1 und VST5 angedeutet, die jeweils über eine eigene Verbindungsleitung z.B. einer X.25-Standleitung oder einer ISDN-Wählleitung mit einem Bedienrechner in Form eines Gateway-Rechners eines Bedien-, Verwaltungs- und Wartungszentrums verbunden sind. VST1 ist an den Gateway-Rechner GBCT1 und VST5 ist an den Gateway-Rechner GBCT2 angeschaltet. Beispielhaft sind weitere digitale Fernmeldevermittlungsstellen VST2, VST3 und VST4 über ein Datenkommunikationsnetz DCN, das im einfachsten Fall einen einzigen Netzknoten - wie z.B. in Figur 2 dargestellt - aufweist, an einen weiteren Gateway-Rechner GBCT3 angeschlossen. Auch könnten noch weitere solche Fernmeldevermittlungsstellen in den beschriebenen Weisen an weitere solche Gateway-Rechner angebunden sein. In solchen Gateway-Rechnern ist jeweils eine Verkehrsleitfunktion RF integriert.

Desweiteren werden in der Figur 3 Bedienrechner BCT, vorzugsweise Personalcomputer, gezeigt, die zusammen mit den Gateway-Rechnern GBCT1 bis GBCT3, die auch Bedienrechner, vorzugsweise Personalcomputer sind, ein Rechnernetz z.B. ein LAN mit TCP/IP-Verkehr innerhalb eines Bedien-, Verwaltungs- und Wartungszentrum bilden. Die genannten Bedienrechner sind untereinander über eine Datenleitung bzw. einen Datenbus verbunden. Die Rechnernetztopologie ist im Beispiel busartig dargestellt und könnte ebenso ringförmig strukturiert sein. Zusätzlich ist eine mit der Datenleitung verbundene Vermittlungseinrichtung VE1 angedeutet, die eine Verbindung zu einem weiteren Datennetz NW z.B. einem WAN (X.25, TCP/IP) aufweist. In einem solchen Rechnernetz können noch weitere derartige Vermittlungseinrichtungen vorgesehen sein. Eine Vermittlungseinrichtung kann durch einen Router oder auch durch eine Schnittstelle in einem Bedienterminal realisiert sein.

Das Datennetz NW ist mit einer weiteren Vermittlungseinrichtung VE2 verbunden, die zu einem weiteren Rechnernetz der gleichen oder einer anderen Art gehört. Im Beispiel ist mit den Bedienrechnern GBCT und BCT ein gleichartiges Rechnernetz, wie vorstehend beschrieben, angedeutet. Zusätzlich könnte das Datennetz NW mit weiteren gleichartigen oder andersartigen Rechner- bzw. Datennetzen in Verbindung stehen.

## Patentansprüche

1. Anordnung einer optimierten Anbindung eines mit mindestens einem Bedienrechner (BCT) ausgestatteten Bedien-, Verwaltungs- und Wartungszentrums an wenigstens eine digitale Fernmeldevermittlungsstelle, die im Falle einer einzelnen digitalen Fernmeldevermittlungsstelle (VST) direkt über eine Verbindungsleitung insbesondere in Form einer Stand- oder Wählleitung oder im Falle mehrerer digitaler Fernmeldevermittlungsstellen (VST2, VST3) indirekt über ein Datenkommunikationsnetz, das mindestens einen Netzknoten (NN) mit Verkehrslenkfunktion umfaßt, an einen Bedienrechner (GBCT/BCT) des Bedien-, Verwaltungs- und Wartungszentrums anschließbar ist, der in Form eines Gateway-Rechners mit Funktionalität zur Verbindung der Verbindungsleitung oder des Datenkommuntikationsnetzes mit einem weiteren diesen Gateway-Rechner umfassenden Rechnernetz, in dem zumindest ein weiterer Bedienrechner (BCT) vorhanden ist, **dadurch gekennzeichnet**, daß für den direkten Anschluß einer weiteren einzelnen digitalen Fernmeldevermittlungsstelle (VST5) und/oder für den indirekten Anschluß weiterer mehrerer digitaler Fernmeldevermittlungsstellen (VST2, VST3, VST4) über ein gesondertes Datenkommunikationsnetz (DCN) an das Bedien-, Verwaltungs- und Wartungszentrum jeweils ein weiterer Gateway-Rechner (GBCT2; GBCT3) vorgesehen ist, wobei in sämtlichen solchen Gateway-Rechnern eine Verkehrsleitfunktion (RF) integriert ist.

2. Anordnung nach Anspruch 1 **dadurch gekennzeichnet**, daß die Bedienrechner und/oder Gateway-Rechner Personalcomputer sind.

3. Anordnung nach einem der vorhergehenden Ansprüche, **dadurch gekennzeichnet**, daß die im Rechnernetz vorhandenen Bedienrechner (BCT) und Gateway-Rechner (GBCT1,..., GBCT3) bzgl. ihrer Kommunikation untereinander gleichberechtigt sind.

4. Anordnung nach einem der vorhergehenden Ansprüche, **dadurch gekennzeichnet**, daß in einem solchen Rechnernetz wenigstens eine Vermittlungseinrichtung (VK) in Form eines Geräts oder Rechners oder einer Schnittstelle innerhalb eines Bedienrechners vorhanden ist, die die Funktionalität zum Anschluß eines weiteren Rechnernetzes und eine dafür entsprechende Verkehrsleitfunktion aufweist.
